# EUROPÄISCHE PATENTSCHRIFT

(11) **EP 1 101 028 B1**
(45) Veröffentlichungstag und Bekanntmachung des Hinweises auf die Patenterteilung: **20.03.2002**
(21) Anmeldenummer: 99939997.5
(22) Anmeldetag: 09.07.1999
(51) Int. Cl.: F02F 1/42

(54) **ZYLINDERKOPF FÜR EINE HUBKOLBEN-BRENNKRAFTMASCHINE**
CYLINDER HEAD FOR A ROTARY PISTON COMBUSTION ENGINE
CULASSE POUR MOTEUR A COMBUSTION INTERNE A PISTON

(30) Priorität: 25.07.1998 DE 19833533
(43) Veröffentlichungstag der Anmeldung: 23.05.2001
(73) Patentinhaber: AUDI AG, 85045 Ingolstadt (DE)
(72) Erfinder: STEMMER, Xaver, D-85084 Reichertshofen (DE)
(86) Internationale Anmeldenummer: EP9904829
(87) Internationale Veröffentlichungsnummer: WO0006881

(56) Entgegenhaltungen:
- EP-A- 0 735 244
- DE-A- 3 943 729
- DE-A- 4 100 459
- DE-A- 4 315 233
- FR-A- 2 552 820

## Beschreibung

Die Erfindung betrifft einen Zylinderkopf für eine Hubkolben-Brennkraftmaschine mit zumindest zwei in Reihe liegenden Zylindern, gemäß dem Oberbegriff des Patentanspruches 1.

Einen derartigen Zylinderkopf zeigt beispielsweise die DE 23 42 530, der je Zylinder zwei Einlaßventile und zwei Auslaßventile aufweist, die über zwei oben liegende Nockenwellen und Tassenstößel betätigt werden. Die Zündkerze je Zylinder ist in der Zylindermittelachse angeordnet, wobei ein zentraler Schacht jeweils gießtechnisch mit der Brennraumplatte des Zylinderkopfes einerseits und mit Nockenwellerlager bildenden Querwänden andererseits verbunden ist. Daraus resultiert eine relativ steife Konstruktion mit günstiger Abstützung der Brennraumplatte gegenüber den Verbrennungsdrücken und günstiger Krafteinleitung der Ventilbetätigungsmittel.

Aufgabe der Erfindung ist es, den gattungsgemäßen Zylinderkopf bei fertigungstechnisch günstiger Konstruktion baulich noch kompakter und steifer und trotzdem gewichtsgünstiger auszubilden.

Diese Aufgabe wird erfindungsgemäß mit den kennzeichnenden Merkmalen des Patentanspruches 1 gelöst. Vorteilhafte Weiterbildungen der Erfindungen sind den weiteren Patentansprüchen entnehmbar.

Durch die erfindungsgemäßen Merkmale wird eine extrem biegefeste und verwindungssteife Zylinderkopf-Konstruktion geschaffen, mit einer durchgehend steifen Abstützung der Brennraumplatte gegen hohe Verbrennungsdrücke - selbst bei Anwendung sehr dünner Wandstärken, die selbstverständlich gießtechnisch noch beherrschbar sein müssen.

Der Kraftfluß bzw. die Abstützung der Brennraumplatte verläuft geradlinig bis zur Oberkante der Seitenwände des Zylinderkopfes und wirkt wie ein entlang des Zylinderkopfes verlaufender, schräg zu den Brennraumplattenmitten gerichteter Träger.

Bevorzugt wird zudem vorgeschlagen, beide Seiten des Zylinderkopfes entsprechend auszubilden, so daß diese "Träger" V-förmig ausgerichtet die Brennraumplatte der mehrzylindrigen Konstruktion wirkungsvoll aussteifen.

Die nach oben abragenden Seitenwände können dabei wellenförmig ausgebildet und an einem Zwischendeck eines Zylinderkopfes oberhalb der Ein- und Auslaßkanäle an die Auflageflächen der Schraubenbutzen und an von den Ein- und/oder Auslaßkanälen abgehenden Ventilführungsangüssen unmittelbar angrenzen. Da diese Ventilführungsangüsse wiederum in die Ein- und Auslaßkanäle einmünden, wird ein unmittelbarer und durchgehend geringe Wandstärken ermöglichender Kraftverlauf von den kuppelförmigen Brennraumwänden der Brennraumplatte bis zu den Zylinderkopf-Seitenwänden erzielt.

Eine ebenfalls sehr wirkungsvolle weitere Abstützung der Brennraumplatte wird dadurch erreicht, daß von jedem zentralen Schacht für das Funktionsbauteil - z. B. eine Zündkerze - nach Art eines Kreuzgewölbes ausgehende Wandabschnitte in die Schraubenbutzen und ferner nach unten teils an das Zwischendeck und teils an zentrale Schmierölkammern je Zylinder im Zylinderkopf von Ölwasserräumen abteilende Trennwände angebunden sind. Daraus resultiert auch im zentrischen Bereich der kuppelförmigen Brennraumwände bzw. der Brennraumplatte eine wirkungsvolle Abstützung über die Zylinderkopfschrauben, die den Zylinderkopf in bekannter weise mit dem Zylindergehäuse der Brennkraftmaschine verbinden.

Eine vorteilhafte weitere Aussteifung der Brennraumplatte in dem kritischen Stegbereich zwischen den aneinander angrenzenden Zylindern wird zudem erzielt, in dem die die Schmierölkammern einschließenden Trennwände an den Zylinderkopf-Boden bzw. an die Brennraumplatte in diesem Bereich angegossen sind.

Durch die vorstehenden Merkmale wird eine die kuppelförmigen Brennräume bzw. die gesamte Brennraumplatte gleichmäßig aussteifende Konstruktion geschaffen, die auch bei hohen Verbrennungdrücken eine zuverlässige Abdichtung gegenüber dem Zylindergehäuse der Brennkraftmaschine sowie eine verwindungs- und biegesteife Konstruktion sicherstellt.

Aufgrund des ferner vorgeschlagenen Rücklaufs des im Zylinderkopf befindlichen Schmieröls entlang den abgasseitigen Schraubenbutzen innerhalb von Trennwänden, die andererseits dem Kühlmedium, insbesondere Kühlwasser, zumindest bereichsweise ausgesetzt sind, werden die abgasseitigen Zylinderkopfschrauben und soweit direkt benetzt die Kanalwände der Abgaskanäle zusätzlich gekühlt, andererseits aber auch eine schnelle Erwärmung des Schmieröls auf Betriebstemperatur unterstützt.

Ferner sind die besagten Schmierölkammern und die oberen Durchbrüche in dem Zwischendeck des Zylinderkopfes so angeordnet, daß keine Schmieröl-Toträume im Zylinderkopf gebildet sind, sondern vielmehr das Schmieröl nahezu vollständig in den Schmierölsumpf zurücklaufen kann.

Ein Ausführungsbeispiel der Erfindung ist im folgenden mit weiteren erläutert. Die schematische Zeichnung zeigt in
- Fig. 1: einen horizontalen Längsschnitt durch einen Zylinderkopf einer mehrzylindrigen Vierventil-Hubkolben-V6-Brennkraftmaschine gemäß Linie I-I der Fig. 4;
- Fig. 2: einen Querschnitt entlang der Linie II-II des Zylinderkopfes gemäß Fig. 1 durch die Brennraummitte eines Zylinders;
- Fig. 3: einen weiteren Querschnitt entlang der Linie III-III durch die zwischen zwei Zylindern der Brennkraftmaschine liegenden Schraubenbutzen für die Zylinderkopf-Befestigungsschrauben;
- Fig. 4: einen Querschnitt entlang der Linie IV-IV des Zylinderkopfes gemäß Fig. 1 im Bereich einer brennraumseitigen Einlaß- und Auslaßöffnung eines korrespondierenden Einlaß- und Auslaßkanales; und
- Fig. 5: einen abschnittsweisen Längsschnitt entlang der Linie V-V gemäß Fig. 3 im Bereich zwischen zwei Zylindern bzw. zwischen zwei einander benachbarten Brennräumen der Brennkraftmaschine.

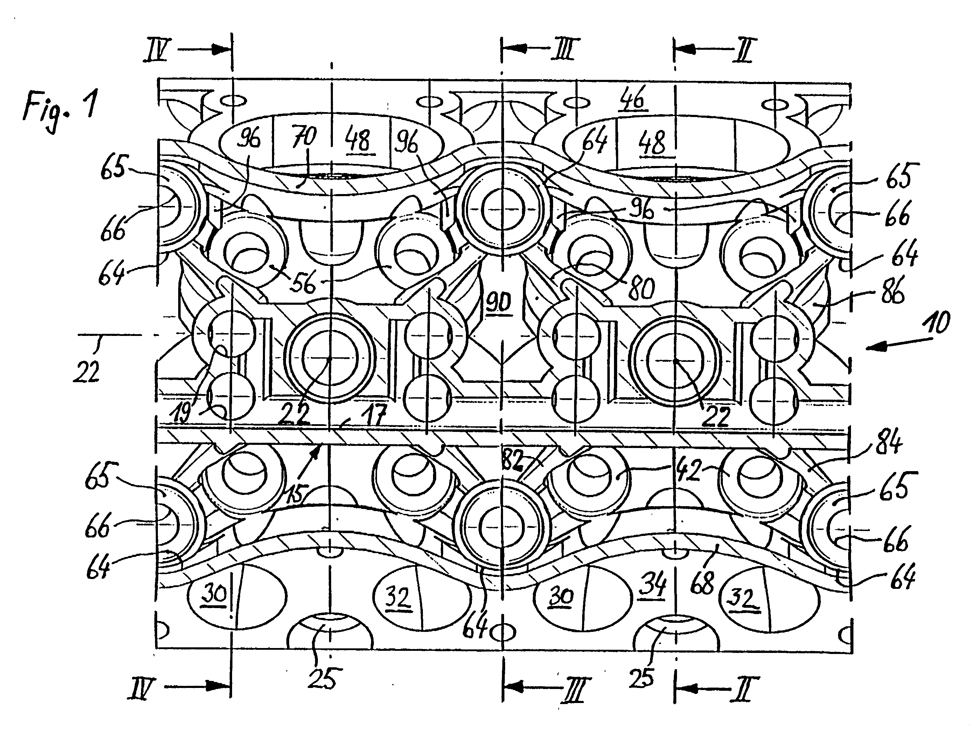

Von dem allgemein mit 10 bezeichneten Zylinderkopf für eine Zylinderreihe einer V6-Hubkolben-Brennkraftmaschine mit je Zylinder vier Gas-Wechsel-Ventilen ist in der Fig. 1 nur der mittlere Abschnitt dargestellt, der etwa zwei Zylinder der einen Zylinderreihe des nicht dargestellten Zylinderkurbelgehäuses der Brennkraftmaschine überdeckt. Der Zylinderkopf 10 ist nur insoweit beschrieben, als dies für das Verständnis der vorliegenden Erfindung erforderlich ist. Im übrigen kann der Zylinderkopf 10 herkömmlicher Bauart sein.

Der im Gießverfahren aus einer Leichtmetall-Legierung hergestellte Zylinderkopf 10 weist eine untere, plane Anschlußfläche 12 zum Anbau auf das Zylinderkurbelgehäuse der Brennkraftmaschine und eine etwa parallel dazu verlaufende Anschlußfläche 14 für einen Lagerdeckel (nicht dargestellt) für die in Querstegen 16 des Zylinderkopfes 10 in Lagerstühlen 18,20 gelagerten Nockenwellen (ebenfalls nicht dargestellt) der Brennkraftmaschine auf. Die Querstege 16 sind über eine etwa mittig über den Zylindern verlaufende Längsschiene 15 miteinander verbunden, wobei die Längsschiene 15 nicht näher beschriebene Schmierölkanäle 17 und Aufnahmebohrungen 19 für Ventilspielausgleichselemente für Schwinghebel zur Betätigung der nicht dargestellten Gaswechsel-Ventile aufweist.

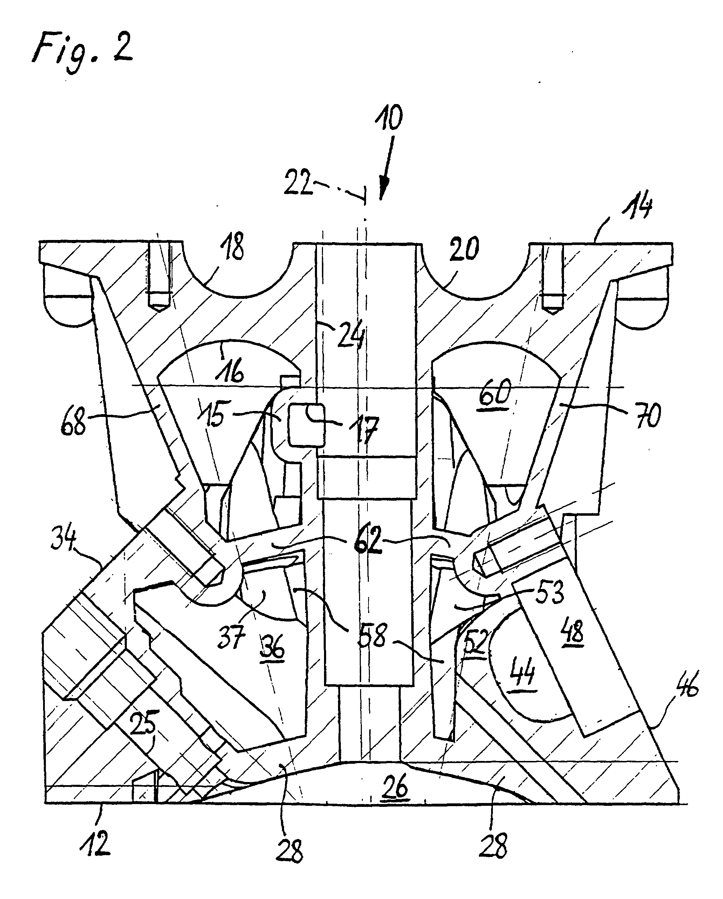

Die Längsschiene 15 ist jeweils etwa zentral über den Zylindern bzw. in deren verlängerten Mittelachsen 22 von je einem ringförmigen Schacht 24 durchdrungen, der jeweils in den von der Brennraumplatte 28 des Zylinderkopfes 10 überspannten Brennraum 26 (vgl. Fig. 2) einmündet.

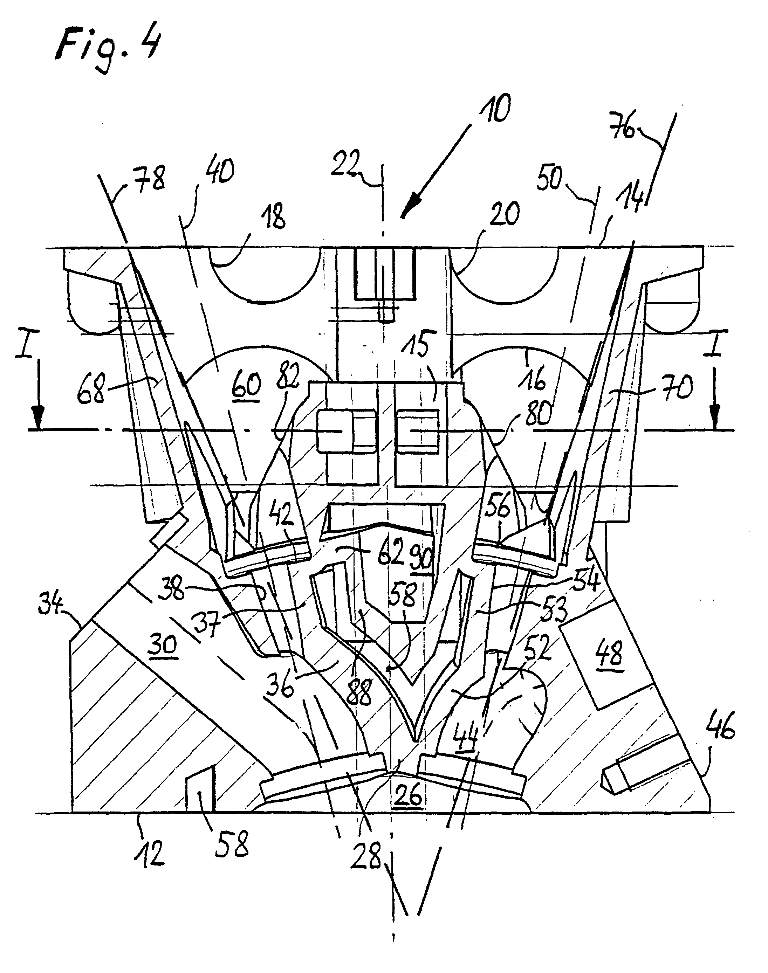

Von der Brennraumplatte 28 gehen zwei Einlaßkanäle 30, 32 aus, die in eine plan durchlaufende Anschlußfläche 34 für den Flanschanschluß eines nicht dargestellten Ansaugverteilers münden. In den entsprechenden Kanalwänden 36 der Einlaßkanäle 30, 32 sind Ventilführungsangüsse 37 mit Bohrungen 38 für nicht dargestellte Ventilführungen für den Einbau der Einlaßventile (vgl. eingezeichnete Längsmittelachsen 40 in Fig. 4) eingebracht. Für die Abstützung der üblichen schraubenförmigen Ventilfedern der Einlaßventile sind ringförmige Abstützflächen 42 an den Enden der Ventilführungsangüsse 37 vorgesehen. Von der Anschlußfläche 34 geht ferner eine in den Brennraum 26 ausmündende Bohrung 25 aus, in die ein Kraftstoff-Einspritzventil einsetzbar ist.

Desweiteren erstrecken sich zwei Auslaßkanäle 44 von der Brennraumplatte 28 zu einer durchgehend planen Anschlußfläche 46, an die der Flansch eines nicht dargestellten Abgaskrümmers anschließbar ist. Die Auslaßkanäle 44 (es ist nur ein Auslaßkanal 44 ersichtlich) sind vor ihrer Mündung in die Anschlußfläche 46 zu einem gemeinsamen Auslaßkanal 48 zusammengeführt. Für die Ventilführungen der in den Längsmittelachsen 50 (Fig. 4) angeordneten Auslaßventile sind von den Kanalwänden 52 ausgehende Ventilführungsangüsse 53 mit Bohrungen 54 vorgesehen, die wiederum an Abstützflächen 56 für die schraubenförmigen Ventilfedern enden.

Die Auflageflächen 42, 56 der Ventilfedem bzw. die Ventilachsen 40, 50 sind in radialer Anordnung (alle Ventilachsen 40, 50 nach unten innen der Zylindermittelachse 22 zugeneigt) so angeordnet, daß sie zur günstigen Krafteinleitung unmittelbar benachbart zu jeweils einem der Schraubenbutzen 64 und zur benachbarten Seitenwand 68, 70 liegen.

Oberhalb der Brennraumplatte 28 sind sich um die Auslaß- und Einlaßkanalwände 36, 52 herum erstreckende und allgemein mit 58 bezeichnete Kühlwasserkanäle vorgesehen, die von dem darüber liegenden Freiraum 60 für von den Schmierstellen abtropfendes Schmieröl durch ein zum Teil horizontal verlaufendes Zwischendeck 62 abgetrennt sind.

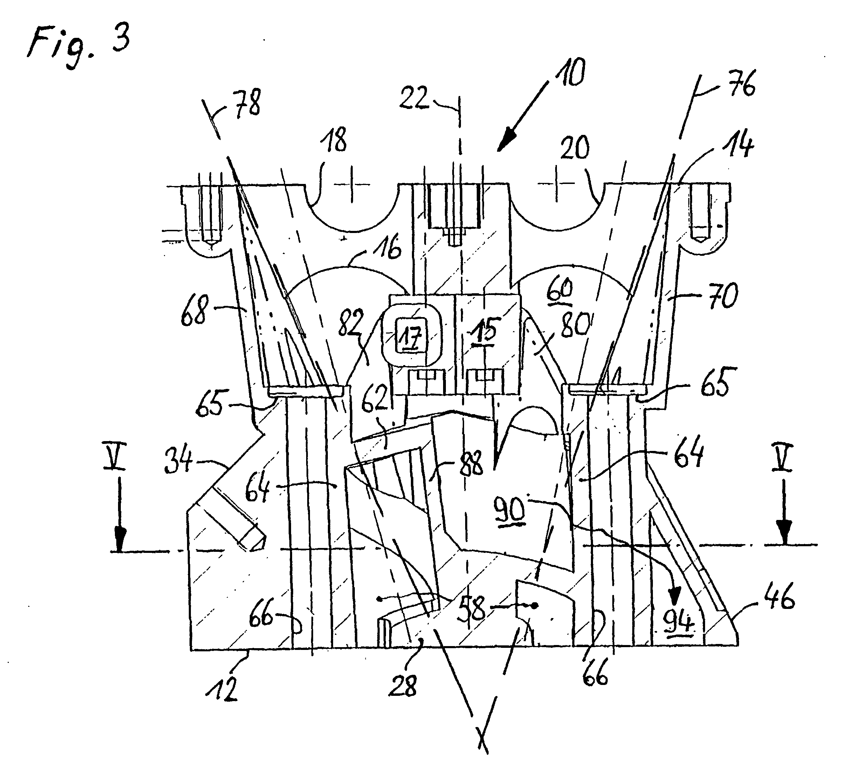

Jeweils zwischen den Zylindern (Mittelachsen 22) und selbstverständlich an den nicht dargestellten Zylinderkopf-Stimseiten sind senkrecht zur Anschlußfläche 12 Schraubenbutzen 64 vorgesehen, in deren Bohrungen 66 nicht dargestellte Zylinderkopf-Befestigungsschrauben einsetzbar sind. Wie die Fig. 3 zeigt, erstrecken sich diese Schraubenbutzen 64 bis etwa zur halben Höhe des Zylinderkopfes 10; von dort schließen sich die teilweise frei nach oben ragenden, den Freiraum 60 seitlich begrenzenden Zylinderkopf-Seitenwände 68, 70 an, die mit den Querstegen 16 und den nicht ersichtlichen Zylinderkopf-Stirnwänden verbunden sind.

Die Seitenwände 68, 70 sind mit ihren zwischen den Schraubenbutzen 64 liegenden Abschnitten 68a bzw. 70a ( Fig. 1) von oben nach unten betrachtet zunehmend so der Zylindermitte 22 zu eingezogen, daß deren untere Abschnitte unmittelbar an die Abstützflächen 42, 56 der Ventilführungsangüsse 37, 53 angrenzen. Der wellenförmige Verlauf der Seitenwände 68, 70 nimmt nach oben zu betrachtet ab und geht schließlich in einen geradlinigen Verlauf im Bereich der Anschlußfläche 14 über.

Die Seitenwände 68, 70 sind durch ihren wellenförmigen Verlauf im Bereich der Befestigungsschrauben-Auflageflächen 65 der Schraubenbutzen 64 teilweise so geneigt (vgl. gestrichelte Linien 76, 78 in Figuren 3 und 4), daß sie im wesentlichen in einer Flucht mit den Auflageflächen 65 der benachbarten Schraubenbutzen 64, den in der Querschnittsfläche ersichtlichen Bereichen der Kanalwände 36 bzw. 52 der Einlaß- und Ausfaßkanäle 30, 32 liegen, wobei diese Kraftwirkungslinien 76, 78 etwa zentrisch die Brennraumplatte 28 in einer durch die Zylindermitten 22 gebildeten Längsebene durchstoßen. Die Anordnung der Kraftwirkungslinien 76, 78 ist dabei V-förmig.

Femer sind von den zentralen Schächten 24 jeweils ausgehende Wandabschnitte 80, 82, 84, 86 vorgesehen, die nach Art eines Kreuzgewölbes (vgl. Fig. 1) jeweils die Brennräume 26 je Zylinder der Brennkraftmaschine überspannen und an die Schraubenbutzen 64 angegossen sind.

Ferner sind die Wandabschnitte 80, 82, 84, 86 nach unten verlaufend teils an das Zwischendeck 62 und teils an Trennwände 88 angebunden, welche Trennwände 88 von dem Zwischendeck 62 zu der Brennraumplatte 28 verlaufen und welche zentrale Schmierölkammern 90 von den Kühlwasserkanälen 58 trennen (vgl. Fig. 1, 3 und 5).

Die Schmierölkammern 90 (vgl. Fig. 1), die jeweils zwischen aneinander angrenzenden Zylindern im Zylinderkopf 10 liegen, erstrecken sich nach unten bis nahe an die Brennraumplatte 28 in deren sogenannten Stegbereich (das entspricht im wesentlichen der Schnittebene III-III) und sind in diesem Bereich an die Brennraumplatte 28 angegossen, so daß diese Stegbereiche der Brennraumplatte 28 über die Wandabschnitte 80, 82, 84, 86 und über die auf die Schraubenbutzen 64 wirkenden Zylinderkopf-Befestigungsschrauben zusätzlich versteift sind. Die Wandabschnitte 80, 82, 84, 86 verlaufen dabei in der Draufsicht (Fig. 1) gesehen jeweils vom Schraubenbutzen 64 an dem benachbarten Ventilführungsanguß 37 bzw. 53 vorbei zum jeweiligen zentralen Schacht 24.

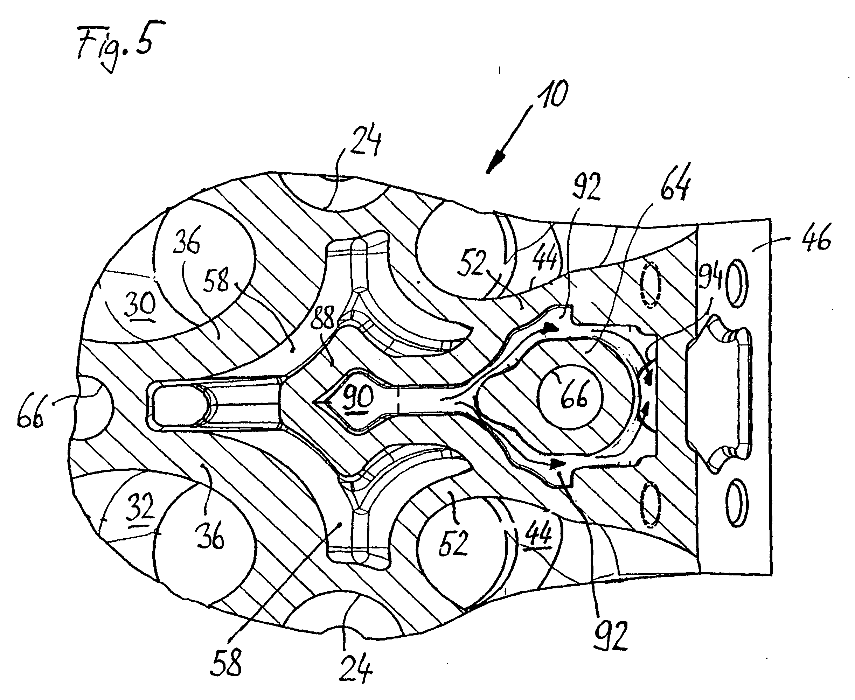

Die Schmierölkammern 90 sind über Durchbrüche 92 um die Schraubenbutzen 64 herum mit einem parallel zum jeweiligen Schraubenbutzen 64 verlaufenden Rücklaufkanal 94 verbunden. Somit kann das in den Schmierölkammern 90 befindliche Schmieröl entsprechend den eingezeichneten Pfeilen in den Fig. 3 und 5 über die Durchbrüche 92 und die Schraubenbutzen 64 herum und danach entlang den Schraubenbutzen 64 nach unten in das Kurbelgehäuse und von dort in den Ölsumpf bzw. in die Ölwanne der Brennkraftmaschine abgeleitet werden. Wie insbesondere aus der Fig. 5 ersichtlich ist, sind dabei Wandbereiche der Trennwände 88 unmittelbar an die Kühlwasserkanäle 58 angrenzend, während im Bereich der Durchbrüche 92 das rücklaufende Schmieröl unmittelbar Bereiche der Kanalwände 52 der Abgaskanäle und die Schraubenbutzen 64 kühlt.

Die oberhalb des Zwischendecks 62 liegenden Freiräume 60 für Schmieröl des Zylinderkopfes 10 sind über im Zwischendeck 62 angeordnete Durchbrüche 96 jeweils an den abgasseitigen Schraubenbutzen 64 mit den Durchbrüchen 92 entlang den Schraubenbutzen 64 verbunden, so daß auch das oberhalb des Zwischendecks 62 befindliche Schmieröl über diese Durchbrüche 96 und die Durchbrüche 92 an den Schraubenbutzen 64 entlang nach unten in den Rücklaufkanal 94 abströmen kann.

Bei Betrachtung der Durchbrüche und Kanäle für den Schmierölrücklauf ist zu berücksichtigen, daß im Ausführungsbeispiel ein Zylinderkopf für eine V6-Hubkolben-Brennkraftmaschine beschrieben ist, dessen Einbaulage z.B. bei einem Zylinderwinkel von 90° sich z.B. anhand der Fig. 3 um 45° im Uhrzeigersinn gedreht vorzustellen ist. Bei einer anderen Neigung des Zylinderkopfes sind die Durchbrüche zum Ablaufen des Schmieröls ohne verbleibende Toträume entsprechend anzupassen.

## Patentansprüche

1. Zylinderkopf für eine Hubkolben-Brennkraftmaschine, mit zumindest zwei in Reihe liegenden Zylindern, mit je Zylinder zumindest einem von einer Brennraumplatte ausgehenden Einlaß- und Auslaßkanal, mit beiderseits der Kanäle angeordneten Schraubenbutzen für Zylinderkopf-Befestigungsschrauben, die innerhalb der Seitenwände des Zylinderkopfes angeordnet sind, mit einem zentral je Brennraum in der Brennraumplatte vorgesehenen Schacht für ein Funktionsbauteil, **dadurch gekennzeichnet, daß** zumindest eine Seitenwand (68, 70) mit den tiefer liegenden Schrauben-Auflageflächen (65) der benachbarten Schraubenbutzen (64) und Bereichen der Kanalwände (36, 52) des zumindest einen Ein- und/oder Auslaßkanales (30, 32, 44) im Querschnitt gesehen im wesentlichen in einer gedachten Linie (76, 78) liegen, die schräg zur Zylindermittelachse (22) etwa in der Zylinderlängsmittelebene die Zylinderkopf-Auflagefläche (12) durchstößt.

2. Zylinderkopf nach Anspruch 1, **dadurch gekennzeichnet, daß** die besagte Anordnung beiderseits des Zylinderkopfes (10) vorgesehen ist, wobei die beiden Linien (76, 78) V-förmig zueinander verlaufen.

3. Zylinderkopf nach den Ansprüchen 1 oder 2, **dadurch gekennzeichnet, daß** die Seitenwände (68, 70) wellenförmig und teilweise nach oben außen geneigt ausgebildet sind und an einem Zwischendeck (62) des Zylinderkopfes (10) oberhalb der Ein- und Auslaßkanäle (30, 32, 44) an die Auflageflächen (65) der Schraubenbutzen (64) und an von den Ein- und/oder Auslaßkanäien (30, 32, 44) abgehende Ventilführungsangüsse (37, 53) unmittelbar angrenzen.

4. Zylinderkopf nach einem oder mehreren der Ansprüche 1 bis 3, **dadurch gekennzeichnet, daß** von jedem zentralen Schacht (24) für das Funktionsbauteil nach Art eines Kreuzgewölbes abgehende Wandabschnitte (80, 82, 84, 86) in die Schraubenbutzen (64) einlaufen.

5. Zylinderkopf nach Anspruch 4, **dadurch gekennzeichnet, daß** die Wandabschnitte (80, 82, 84, 86) femer nach unten teils an das Zwischendeck (62) und teils an zentrale Schmierölkammern (90) je Zylinder im Zylinderkopf (10) von Kühlwasserkanälen (58) abteilende Trennwände (88) angebunden sind.

6. Zylinderkopf nach Anspruch 4 oder 5, **dadurch gekennzeichnet, daß** die Wandabschnitte (80, 82, 84, 86) in der Draufsicht (Fig. 1) gesehen jeweils von den Schraubenbutzen (64) an den benachbarten Ventilführungsangüssen (37, 53) vorbei zum zentralen Schacht (24) verlaufen.

7. Zylinderkopf nach einem oder mehreren der Ansprüche 1 bis 6, **dadurch gekennzeichnet, daß** die Schmierölkammern (90) um die Schraubenbutzen (64) herum und an diesen entlang über Durchbrüche (92) mit je einem parallel zu den Schraubenbutzen (64) angeformten Rücklaufkanal (94) kommunizieren.

8. Zylinderkopf nach Anspruch 7, **dadurch gekennzeichnet, daß** am Zwischendeck (62) femer Durchbrüche (96) vorgesehen sind, die oberhalb der Schmierölkammer (90) liegen und die ebenfalls entlang den Schraubenbutzen (64) über die Durchbrüche (92) mit dem Rücklaufkanal (94) verbunden sind.

9. Zylinderkopf nach Anspruch 5, **dadurch gekennzeichnet, daß** die die Schmierölkammern (90) einschließenden Trennwände (88) an die Brennraumplatte (28) im Bereich des geringsten Abstandes zwischen den benachbarten Zylindern (Schnittebene III, Stegbereich) angegossen sind.

10. Zylinderkopf nach einem oder mehreren der Ansprüche 1 bis 9, **dadurch gekennzeichnet, daß** zwei Einlaßkanäle (30, 32) und zwei Auslaßkanäle (44) je Zylinder vorgesehen sind, daß der zentrale Schacht (24) ein Zündkerzenschacht ist und daß zwischen den beiden Einlaßkanälen (30, 32) jeweils eine direkt in die Brennräume (26) mündende Bohrung 25 für eine Kraftstoff-Einspritzdüse vorgesehen ist.

## Claims

1. Cylinder head for a reciprocating internal-combustion engine, having at least two cylinders arranged in a line, per cylinder at least one inlet port and outlet port leading from a combustion chamber plate, screw slugs arranged on either side of the ports to take cylinder head fixing screws which are arranged within the side walls of the cylinder head, and provided centrally per combustion chamber in the combustion chamber plate a shaft designed to take a functional component,
**characterised in that**, seen in cross-section, at least one side wall (68, 70) having the lower screw supporting surfaces (65) of the adjacent screw slugs (64) and areas of the port walls (36, 52) of the at least one inlet and/or outlet port (30, 32, 44) lie, viewed in cross-section, substantially along an imaginary line (76, 78) which at an angle to the cylinder's central axis (22) pierces the cylinder head supporting surface (12) more or less in the cylinder's longitudinal central plane.

2. Cylinder head according to claim 1, **characterised in that** the aforesaid arrangement is provided on either side of the cylinder head (10), with the two lines (76, 78) converging in the shape of a V.

3. Cylinder head according to claim 1 or 2, **characterised in that** the side walls (68, 70) are undulated in construction and in part slope outwards towards the top, and on an intermediate deck (62) of the cylinder head (10) above the inlet and outlet ports (30, 32, 44), said walls (68, 70) directly adjoin the supporting surfaces (65) of the screw slugs (64) and valve guide stalks (37, 53) which run from the inlet and/or outlet ports (30, 32, 44).

4. Cylinder head according to one or more of claims 1 to 3, **characterised in that** wall sections (80, 82, 84, 86) running in the manner of a cross-vault from each central shaft (24) for the functional component merge into the screw slugs (64).

5. Cylinder head according to claim 4, **characterised in that** the wall sections (80, 82, 84, 86) are also connected in a downward direction in part to the intermediate deck (62) and in part to partition walls (88) which divide central oil compartments (90) for each cylinder in the cylinder head (10) from coolant ports (58).

6. Cylinder head according to claim 4 or 5, **characterised in that** seen in plan view (Fig. 1) the wall sections (80, 82, 84, 86) in each case run from the screw slugs (64) past the adjacent valve guide stalks (37, 53) to the central shaft (24).

7. Cylinder head according to one or more of claims 1 to 6, **characterised in that** the oil compartments (90) communicate around and along the screw slugs (64) via passages (92) with a respective return port (94) formed parallel to the screw slugs (64).

8. Cylinder head according to claim 7, **characterised in that** also provided on the intermediate deck (62) are passages (96) which are located above the oil compartment (90) and which are likewise connected to the return port (94) along the screw slugs (64), via the passages (92).

9. Cylinder head according to claim 5, **characterised in that** the partition walls (88) which enclose the oil compartments (90) are cast onto the combustion chamber plate (28) in the area of the smallest distance between the neighbouring cylinders (sectional plane III, area of land).

10. Cylinder head according to one or more of claims 1 to 9, **characterised in that** two inlet ports (30, 32) and two outlet ports (44) are provided per cylinder, that the central shaft (24) is a spark plug shaft and that between the two inlet ports (30, 32) there is in each case provided a bore (25) for a fuel injection nozzle, said bore opening out directly into the combustion chambers (26).

## Revendications

1. Culasse pour un moteur à combustion interne à pistons, avec au moins deux cylindres placés en ligne, avec, pour chaque cylindre, au moins un canal d'admission et au moins un canal d'échappement partant d'une plaque de chambre de combustion, avec des lamages pour vis, disposés des deux côtés des canaux, pour des vis de fixation de culasse, disposées à l'intérieur des parois latérales de la culasse, avec un puits, prévu au centre de chaque chambre de combustion dans la plaque de chambre de combustion, pour un composant fonctionnel, **caractérisée par** au moins une paroi latérale (68, 70) avec les surfaces de pose de vis (65), placées plus profondément que des lamages pour vis (64) voisins et des zones des parois de canal (36, 52) du au moins un canal d'admission et/ou d'échappement (30, 32, 44), en observant en coupe transversale, sensiblement en une ligne imaginaire (76, 78), qui passe obliquement par rapport à l'axe de cylindre (22) à peu près dans le plan médian longitudinal des cylindres de la surface de pose de culasse (12).

2. Culasse selon la revendication 1, **caractérisée en ce que** ledit agencement est prévu des deux côtés de la culasse (10), les deux lignes (76, 78) faisant entre elles un V.

3. Culasse selon la revendication 1 ou 2, **caractérisée en ce que** les parois latérales (68, 70) sont configurées en forme d'ondulation et inclinées partiellement vers le haut et l'extérieur et, en un pont intermédiaire (62) de la culasse (10), au-dessus des canaux d'admission et d'échappement (30, 32, 44), délimitent directement, sur les surfaces de pose (65), des lamages pour vis (64), et des appendices moulés de guidages de soupape (37, 53) partant des canaux d'admission et/ou d'échappement (30, 32, 44).

4. Culasse selon l'une ou plusieurs des revendications 1 à 3, **caractérisée en ce que** depuis chaque puits central (24) pour le composant fonctionnel des tronçons de paroi (80, 82, 84, 86), partant à la façon d'une route croisée, pénètrent dans les lamages pour vis (64).

5. Culasse selon la revendication 4, **caractérisée en ce que** les tronçons de paroi (80, 82, 84, 86) sont reliés par la matière, en outre vers le bas, en partie, au pont intermédiaire (62) et, en partie, à des parois de séparation (88) séparant des chambres d'huile de lubrification centrales (90) ménagés pour chaque cylindre dans la culasse (10), vis-à-vis de canaux de refroidissement (58).

6. Culasse selon la revendication 4 ou 5, **caractérisée en ce que** les tronçons de paroi (80, 82, 84, 86), en observant en vue de dessus (figure 1), s'étendent chaque fois depuis les lamages pour vis (64) sur les appendices moulés de guidages de soupape (37, 53) voisins vers le puits central (24).

7. Culasse selon l'une ou plusieurs des revendications 1 à 6, **caractérisée en ce que** les chambres à huile de lubrification (90), situées autour des lamages pour vis (64) et le long de ceux-ci, communiquent, par des passages (92), chaque fois avec un canal de retour (94), formé d'un seul tenant parallèlement aux lamages pour vis (64).

8. Culasse selon la revendication 7, **caractérisée en ce que**, sur le pont intermédiaire (62), sont en outre prévus des passages (96), qui sont situés au-dessus de la chambre à huile lubrification (90) et qui sont également reliés, le long du lamage pour vis (64), par les passages (92), au canal de retour (94).

9. Culasse selon la revendication 5, **caractérisée en ce que** les parois de séparation (88), qui enclosent les chambres d'huile de lubrification (90) sur la plaque de chambre de combustion (28), sont moulées d'un seul tenant dans la zone de l'espacement minimal entre les cylindres voisins (plan de coupe III, zone de nervure).

10. Culasse selon une ou plusieurs des revendications 1 à 9, **caractérisée en ce que** deux canaux d'admission (30, 32) et deux canaux d'échappement (44) sont prévus par cylindre, **en ce que** le puits central (24) est un puits pour bougie d'allumage, et **en ce que**, entre les deux canaux d'admission (30, 32), est chaque fois prévu un perçage (25), débouchant directement dans les chambres de combustion (26), pour un injecteur de carburant.
